# EUROPÄISCHE PATENTSCHRIFT

(11) **EP 0 471 168 B1**
(45) Veröffentlichungstag und Bekanntmachung des Hinweises auf die Patenterteilung: **17.11.1994**
(21) Anmeldenummer: 91110204.4
(22) Anmeldetag: 20.06.1991
(51) Int. Cl.: G01B 5/00

(54) **Halterung für den Taster von Koordinatenmessmaschinen**
Support for the feeler of a coordinate measuring machine
Support pour le palpeur d'une machine de mesure de coordonnées

(30) Priorität: 16.08.1990 DE 4025829
(43) Veröffentlichungstag der Anmeldung: 19.02.1992
(73) Patentinhaber: Zeiss Messgerätebau GmbH, D-76275 Ettlingen (DE)
(72) Erfinder: Bertz, Hans-Ulrich, W-7554 Kuppenheim (DE); Meder, Willi, W-7505 Ettlingen 5 (DE); Neuthinger, Albert, W-7502 Malsch-Völersbach (DE)
(74) Vertreter: Lemcke, Rupert, Dipl.-Ing.

(56) Entgegenhaltungen:
- BE-A- 890 725
- DD-A- 278 087
- DE-A- 3 811 851
- DE-U- 8 629 693
- DE-U- 8 701 460

## Beschreibung

Die Erfindung betrifft eine Halterung zur auswechselbaren Befestigung eines Taststiftes oder einer Taststiftkombination am Tastkopf einer Koordinatenmeßmaschine, wobei die Halterung eine Aufnahmevorrichtung zur Befestigung am Tastkopf aufweist, an der ein Lager ist, das die Lage eines zur Halterung zählenden Anschlußkörpers des Taststiftes oder der Taststiftkombination eindeutig bestimmt, wenn eine in der Aufnahmevorrichtung angeordnete Spanneinrichtung der Halterung den Anschlußkörper in das Lager zieht.

Solche Halterungen werden in den Tastkopf von Mehrkoordinatenmeßmaschinen eingebaut, damit beim Wechsel der Meßaufgabe, insbesondere beim automatischen Vermessen jeweils ein an die entsprechende Meßaufgabe angepaßter Taststift oder eine entsprechend angepaßte Taststiftkombination schnell ausgewechselt werden können.

Dazu ist aus der DE-A-33 20 127 bzw. der DE-A-38 11 851 eine Aufnahme zur auswechselbaren Befestigung eines Taststiftes bzw. einer Taststiftkombination am Tastkopf einer Koordinatenmeßmaschine bekannt, bei der eine elektrisch arbeitende Spanneinrichtung den Anschlußkörper des Taststiftes bzw. der Taststiftkombination gegen ein seine Lage eindeutig bestimmendes Lager in der Aufnahme am Tastkopf zieht.

Bei dieser elektrisch arbeitenden Spanneinrichtung handelt es sich entweder um einen kleinen Elektromotor mit einer Gewindespindel oder um einen Elektromagneten, mit dem das Feld eines Permanentmagneten kompensiert oder verstärkt wird.

Nachteil dieser Einrichtungen ist, daß sie zum einen relativ schwer sind und so die für schnelle, positionsgenaue Bewegungen des Tastkopfes ungünstige träge Masse erhöhen und zum anderen bei ihrer Betätigung Wärme freisetzen, die sich bei häufigem Taststiftwechsel sowohl unvorteilhaft auf die Rastgenauigkeit der Taststifte als auch auf die Meßgenauigkeit auswirkt.

Des weiteren ist aus der DE-PS 35 26 108 eine Aufnahme zur auswechselbaren Befestigung eines Taststiftes bzw. einer Taststiftkombination am Tastkopf einer Koordinatenmeßmaschine bekannt, bei der ein mechanisches, auf den Anschlußkörper des Taststiftes bzw. der Taststiftkombination wirkendes Spannwerk benutzt wird, um diesen gegen ein seine Lage eindeutig bestimmendes Lager in der Aufnahme am Tastkopf zu ziehen. Dieses Spannwerk löst jedoch bei einer Kollision von Taststift und Werkstück nicht aus, so daß die Gefahr besteht, daß dabei der gesamte Tastkopf beschädigt wird.

Außerdem ist aus dem JP-Abstract 58-37 501 (A) ein Meßkopf bekannt, bei dem der Schaft eines Taststiftes über Unterdruck in einer Bohrung am Tastkopf gehalten wird.

Abgesehen von der hierbei fehlenden Möglichkeit, die Winkellage insbesondere einer Taststiftkombination genau zu definieren, kann auch bei dieser Taststifthalterung der Tastkopf beschädigt werden, falls es durch eine Fehlbedienung zu einer Kollision zwischen Taststift und Werkstück kommt.

Schließlich ist es durch das DE-U-87 01 460 allgemein bekannt, Saugnäpfe zur gegenseitigen Befestigung zweier Teile zu verwenden, beispielsweise zur Anbringung einer Werbetafel auf dem Dach eines Kraftfahrzeuges.

Aufgabe der Erfindung ist es daher, eine Halterung anzugeben, bei der die Spanneinrichtung die träge Masse der Halterung wenig erhöht und bei deren Betätigung keine Wärmebelastung der Halterung auftritt. Gleichzeitig soll die Vorrichtung preiswert in der Herstellung und sicher im Betrieb sein.

Diese Aufgabe wird erfindungsgemäß bei einer Halterung der eingangs genannten Art dadurch gelöst, daß die Spanneinrichtung durch einen mit Unterdruck beaufschlagbaren elastischen Saugnapf zwischen Aufnahmevorrichtung und Anschlußkörper gebildet ist.

Der Vorteil des Gegenstandes der Erfindung liegt darin, daß er zum einen sehr klein baut und so der gesamte Tastkopf kleiner und leichter gestaltet werden kann. Zum anderen kann durch eine Veränderung des Unterdrucks die Haltekraft zwischen Aufnahmevorrichtung und Anschlußkörper in einem großen Bereich variiert werden, ohne daß dadurch die Wärmebelastung des Tastkopfes beeinflußt wird. Außerdem löst sich die Verbindung, wenn bei einer Kollision zu hohe Kräfte vom Taster auf den Tastkopf übertragen werden, so daß die Meßmaschine vor mechanischer Beschädigung geschützt werden kann.

Der elastische Saugnapf, der die mit Unterdruck beaufschlagbare Verbindung zwischen Aufnahmevorrichtung und Anschlußkörper bildet, hat den Vorteil, daß er in gewissen Grenzen variabel ist bezüglich der Paßgenauigkeit zwischen Anschlußkörper und Aufnahmevorrichtung.

Wenn die mit Unterdruck beaufschlagbare Spanneinrichtung durch eine Bohrung, die im vom Saugnapf begrenzten Volumen endet, insbesondere eine mittige Bohrung der Aufnahmevorrichtung, evakuierbar ist, so kann durch einfache Steuerung des Unterdrucks die Haltekraft zwischen Aufnahmevorrichtung und Anschlußkörper an das Gewicht des am Anschlußkörper befindlichen Taststifts bzw. Taststiftkombination angepaßt werden, so daß diese immer mit gleicher Sicherheit gehalten werden.

Es ist von Vorteil, wenn der Anschlußkörper eine glatte Fläche aufweist, die mit dem an der Aufnahmevorrichtung befindlichen Saugnapf korrespondiert, oder daß die Aufnahmevorrichtung eine glatte Fläche aufweist, die mit dem an dem Anschlußkörper befindlichen Saugnapf korrespondiert. In beiden Fällen kann so eine hohe Betriebssicherheit gewährleistet werden, wobei die erste Ausführungsform zu bevorzugen ist, da bei ihr auch bei mehreren, unterschiedlichen Taststiften oder Taststiftkombinationen nur ein Saugnapf nämlich an der Aufnahmevorrichtung benötigt wird.

Um zu verhindern, daß bei Ausfall der Unterdruckversorgung der Taststift bzw. die Taststiftkombination aus der Aufnahmevorrichtung fallen und eventuell beschädigt werden, können zwischen Aufnahmevorrichtung und Anschlußkörper zusätzliche, selbsttätig wirkende Haftelemente angeordnet sein, die an der Aufnahmevorrichtung und/oder an dem Anschlußkörper befestigt sind, so daß in der beschriebenen Situation der Anschlußkörper nicht aus der Aufnahmevorrichtung herausfällt.

Für diese Haftelemente gibt es unterschiedlichste Ausführungsformen:
Eine Möglichkeit ist, sie als mindestens einen Permanentmagneten auszubilden, der mit seiner Magnetkraft die Gewichtskraft des Anschlußkörpers mit dem Taststift bzw. der Taststiftkombination kompensiert.

Eine andere Möglichkeit ist, kleine Saugnäpfchen zu verwenden, die beim Betätigen der Spanneinrichtung unabhängig von dem Hauptsaugnapf betätigt werden und so den Anschlußkörper auch dann noch halten, wenn im Hauptsaugnapf kein Unterdruck mehr herrscht.

Eine weitere Art die Haftelemente zu bilden, ist sogenannte Klettverbindungen zu verwenden, die aufgrund ihrer spezifischen Wirkungsweise ausgesprochen schmutzunempfindlich sind.

Außerdem soll noch erwähnt werden, daß die Haftelemente mechanische Rastelemente sein können, wie z. B. Klinken, Kugelrasten oder ähnliche Sicherungselemente.

Je nach Anforderung an die Klemmverbindungen können die entsprechenden Bauteile sowohl aus Metall als auch aus Kunststoff bestehen.

Um eine raumsparende Bauform zu erreichen, ist es günstig, die Haftelemente innerhalb des mit Unterdruck beaufschlagten Volumens anzuordnen. Um eine Beeinflussung von Spanneinrichtung und Haftelement zu vermeiden, kann es aber auch sinnvoll sein, die Haftelemente außerhalb des mit Unterdruck beaufschlagten Volumens anzuordnen.

Um zwischen Anschlußkörper und Aufnahmevorrichtung keine zu engen Fertigungstoleranzen vorschreiben zu müssen, ist es von Vorteil, wenn die Haftelemente über federnd elastische Zwischenglieder mit der Aufnahmevorrichtung bzw. dem Anschlußkörper verbunden sind, oder wenn die mit der Aufnahmevorrichtung bzw. dem Anschlußkörper verbundenen Haftelemente auf ein mit dem jeweils gegenüberliegenden Teil verbundenes, federnd elastisches Zwischenglied einwirken. Dabei ist bei einer bevorzugten Ausführungsform dieses Zwischenglied eine auf das Haftelement vorgewölbte Ring-Membranfeder.

Um die weiter oben schon erwähnte träge Masse des Tastkopfes weiter zu verringern, ist es vorteilhaft, den Anschlußkörper aus Leichtmetall oder aus Kunststoff zu fertigen.

Je nach Ausführungsform würde dann das an diesem Anschlußkörper befindliche Zwischenglied aus einem anderen Material bestehen, so daß zum Beispiel ein an der Aufnahmevorrichtung befestigter, als Haftelement fungierender Permanentmagnet mit einer aus magnetischem Material hergestellten Ring-Membranfeder zusammenwirken würde, die an einem aus Leichtmetall oder Kunststoff gefertigten Anschlußkörper befestigt ist.

Um die Lage des Anschlußkörpers in der Aufnahmevorrichtung klar zu definieren, können entweder an der Aufnahmevorrichtung oder an dem Anschlußkörper drei Paare von Zylinderkörpern sein, die jeweils mit einer von drei Kugelkalotten am anderen Teil korrespondieren. Es ist aber auch denkbar, die Paare von Zylinderkörpern durch Kugelpaare zu ersetzen, die dann jeweils mit einem von drei Zylinderkörpern am anderen Teil korrespondieren.

Um das beschriebene Dreipunktlager möglichst stabil zu gestalten, werden die drei Auflagestellen gleichmäßig auf einem Kreis verteilt. Dadurch ist aber die Winkellage des Anschlußkörpers in der Aufnahmevorrichtung nicht eindeutig sondern nur in Schritten von 120° exakt zu definieren, was insbesondere bei Taststiftkombinationen nicht vertretbar ist.
Um auch die Winkelposition des Anschlußkörpers und damit der Taster oder der Taststiftkombination in der Aufnahmevorrichtung sicher zu definieren, wird diese durch einen Stift am Anschlußkörper festgelegt, der mit einer Ausnehmung an der Aufnahmevorrichtung korrespondiert oder durch einen Stift an der Aufnahmevorrichtung, der mit einer Ausnehmung am Anschlußkörper korrespondiert.

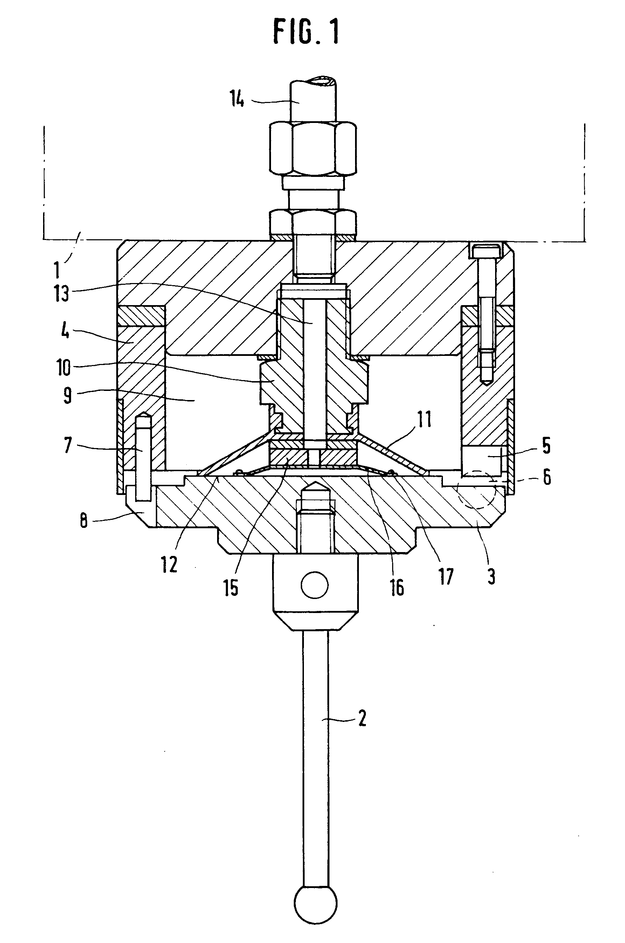

Weitere Vorteile und Merkmale der Erfindung ergeben sich aus der Beschreibung eines Ausführungsbeispieles. Dabei zeigt
- Fig. 1: Schnitt durch eine erfindungsgemäße Halterung
An einem nicht näher dargestellten Tastkopf 1 einer Koordinatenmeßmaschine ist ein Taststift 2 befestigt. Dazu ist der Taststift 2 in eine Bohrung an der Unterseite eines im wesentlichen scheibenförmigen Anschlußkörpers 3 eingeschraubt, der an einer topfförmigen Aufnahmevorrichtung 4 anliegt, die am Tastkopf 1 befestigt ist.

Um bei an die Aufnahmevorrichtung 4 in Anlage befindlichem Anschlußkörper 3 dessen Lage genau festlegen zu können, weist die Aufnahmevorrichtung 4 an ihrem unteren äußeren Rand drei Zylinderkörper 5 auf, die mit drei Kugelpaaren 6 Zusammenwirken, die auf der Oberseite des Anschlußkörpers 3 liegen. Außerdem ist die Aufnahmevorrichtung 4 mit einem zusätzlichen Kennstift 7 versehen, der mit einer Ausnehmung 8 am Anschlußkörper 3 korrespondiert und so dessen Lage zusätzlich definiert.

Um den Anschlußkörper 3 fest an die Aufnahmevorrichtung 4 zu koppeln, weist diese in einem nach unten offenen, durch den Anschlußkörper 3 im wesentlichen verschlossenen Hohlraum 9 eine Spanneinrichtung 10 auf.

Im dargestellten Beispiel ist diese Spanneinrichtung ein Saugnapf 11, der mit einer glatten Fläche 12 des Anschlußkörpers 3 zusammenwirkt und durch eine Bohrung 13 evakuiert werden kann.

Wenn durch die Bohrung 13 der durch den Saugnapf 11 und die glatte Fläche 12 begrenzte Raum evakuiert wird, wird der Anschlußkörper 3 aufgrund der wirkenden Kräfte in die Aufnahmevorrichtung 4 hineingezogen, so daß er über seine Kugelpaare 6 fest auf die Zylinderkörper 5 gezogen wird.

Sollte an der Unterdruckleitung 14 der Unterdruck unbeabsichtigt abfallen, so besteht die Gefahr, daß der Anschlußkörper 3 von der Aufnahmevorrichtung 4 abfällt, wobei sowohl der Taststift 2 als auch das zu vermessende Werkstück beschädigt werden können.

Um dies zu verhindern, ist an der Spanneinrichtung 10 ein Permanentmagnet 15 zentrisch im Saugnapf 11 angebracht, an dem eine Ring-Membranfeder 16 haftet, die über Nieten oder Schrauben 17 mit dem Anschlußkörper 3 verbunden ist.

Durch diese Ring-Membranfeder 16 können zwei wesentliche Punkte erreicht werden: Zum einen kann bei Wahl einer Ring-Membranfeder aus magnetischem Material, zum Beispiel Weicheisen, der Anschlußkörper 3 aus jedem beliebigen Material gefertigt werden, zum Beispiel aus Kunststoff oder aus Leichtmetall, was Gewichtsvorteile mit sich bringt.

Zum anderen wirken die Magnetkräfte bei direkter Anlage des angezogenen Körpers am besten und durch die Elastizität der Ring-Membranfeder wird gewährleistet, daß ohne daß geringe Fertigungstoleranzen notwendig wären, der Anschlußkörper 3 sowohl mit dem Permanentmagneten 16 in Kontakt ist als auch mit dem seine exakte Lage bestimmenden Dreipunktlager, das durch die Kugelpaare 6 mit den Zylinderkörpern 5 gebildet wird.

Ein regulärer Wechselzyklus läuft wie folgt ab:
Der Tastkopf 1 wird mit der Aufnahmevorrichtung 4 über den in einem Magazin bereitgestellten Anschlußkörper 3 gefahren, und auf diesen abgesenkt. Durch Beaufschlagung des Saugnapfes 11 durch die Unterdruckleitung 14 und die Bohrung 13 mit Unterdruck wird der Anschlußkörper 3 mit dem daran befindlichen Taststift 2 mit seinem Kugelpaar 6 fest gegen die Zylinderkörper 5 gezogen. Der Tastkopf 1 fährt dann zurück, wobei er den Anschlußkörper 3 mit seinem Taststift 2 aus dem Magazin entnimmt.

Nach der Meßaufgabe fährt der Tastkopf 1 wieder an die Position zurück, an der er den Anschlußkörper 3 mit dem Taststift 2 entnommen hat und senkt sich ab, bis Anschlußkörper 3 und Taststift 2 an ihrem Sollplatz im Magazin sind. Dann wird der Unterdruck im Saugnapf 11 abgeschaltet und der Tastkopf 1 fährt mit der Aufnahmevorrichtung 4 zurück. Durch eine leichte Klemmung des Anschlußkörpers 3 oder des Taststiftes 2 im Magazin wird dabei die Verbindung zwischen dem Permanentmagneten 15 und der Ring-Membranfeder 16 getrennt, so daß der Tastkopf 1 mit der Aufnahmevorrichtung 4 einen anderen Taststift oder eine andere Taststiftkombination aufnehmen kann.

Um die Verbindung zwischen dem Tastkopf 1 und dem Anschlußkörper 3 mit seinem Taststift 2 zu lösen, kann der vom Saugnapf 11 begrenzte Raum auch kurzzeitig durch die Bohrung 13 mit Überdruck beaufschlagt werden. So wird ein Ablegen des Anschlußkörpers 3 mit einem Taststift 2 im Magazin erleichert.

## Patentansprüche

1. Halterung zur auswechselbaren Befestigung eines Taststiftes oder einer Taststiftkombination am Tastkopf (1) einer Koordinatenmeßmaschine, wobei die Halterung eine Aufnahmevorrichtung (4) zur Befestigung am Tastkopf (1) aufweist, an der ein Lager (5) ist, das die Lage eines zur Halterung zählenden Anschlußkörpers (3) des Taststiftes (2) oder der Taststiftkombination eindeutig bestimmt, wenn eine in der Aufnahmevorrichtung (4) angeordnete Spanneinrichtung (10) der Halterung den Anschlußkörper (3) in das Lager (5) zieht, dadurch gekennzeichnet, daß die Spanneinrichtung (10) durch einen mit Unterdruck beaufschlagbaren elastischen Saugnapf (11) zwischen Aufnahmevorrichtung (4) und Anschlußkörper (3) gebildet ist.

2. Halterung gemäß Anspruch 1,
dadurch gekennzeichnet,
daß die mit Unterdruck beaufschlagbare Spanneinrichtung (10) durch eine Bohrung (13), die im vom Saugnapf (11) begrenzten Volumen endet, insbesondere eine mittige Bohrung der Aufnahmevorrichtung (4) evakuierbar ist.

3. Halterung gemäß Anspruch 1,
dadurch gekennzeichnet,
daß der Anschlußkörper (3) eine glatte Fläche (12) aufweist, die mit dem an der Aufnahmevorrichtung (4) befindlichen Saugnapf (11) korrespondiert.

4. Halterung gemäß Anspruch 1,
dadurch gekennzeichnet,
daß die Aufnahmevorrichtung (4) eine glatte Fläche (12) aufweist, die mit dem an dem Anschlußkörper (3) befindlichen Saugnapf (11) korrespondiert.

5. Halterung gemäß Anspruch 1,
dadurch gekennzeichnet,
daß zwischen Aufnahmevorrichtung (4) und Anschlußkörper (3) zusätzliche, selbsttätig wirkende Haftelemente (15) angeordnet sind, die an der Aufnahmevorrichtung (4) und/oder an dem Anschlußkörper (3) befestigt sind.

6. Halterung gemäß Anspruch 5,
dadurch gekennzeichnet,
daß die Haftelemente durch wenigstens einen Permanentmagneten (15) gebildet sind.

7. Halterung gemäß Anspruch 5,
dadurch gekennzeichnet,
daß die Haftelemente kleine Saugnäpfchen sind.

8. Halterung gemäß Anspruch 5,
dadurch gekennzeichnet,
daß die Haftelemente Klettverbindungen sind.

9. Halterung gemäß Anspruch 5,
dadurch gekennzeichnet,
daß die Haftelemente mechanische Rastelemente sind.

10. Halterung gemäß Anspruch 5,
dadurch gekennzeichnet,
daß die Haftelemente (15) innerhalb des mit Unterdruck beaufschlagten Volumens angeordnet sind.

11. Halterung gemäß Anspruch 5,
dadurch gekennzeichnet,
daß die Haftelemente außerhalb des mit Unterdruck beaufschlagten Volumens angeordnet sind.

12. Halterung gemäß Anspruch 5,
dadurch gekennzeichnet,
daß die Haftelemente über ein federnd elastisches Zwischenglied mit der Aufnahmevorrichtung (4) bzw. dem Anschlußkörper (3) verbunden sind.

13. Halterung gemäß Anspruch 5,
dadurch gekennzeichnet,
daß die mit der Aufnahmevorrichtung (4) bzw. dem Anschlußkörper (3) verbundenen Haftelemente (15) auf ein mit dem jeweils gegenüberliegenden Teil verbundenes, federnd elastisches Zwischenglied (16) einwirken.

14. Halterung gemäß Anspruch 13,
dadurch gekennzeichnet,
daß das Zwischenglied eine auf das Haftelement (15) vorgewölbte Ring-Membranfeder (16) ist.

15. Halterung gemäß Anspruch 1,
dadurch gekennzeichnet,
daß der Anschlußkörper (3) aus Leichtmetall besteht.

16. Halterung gemäß Anspruch 1,
dadurch gekennzeichnet,
daß der Anschlußkörper (3) aus Kunststoff besteht.

17. Halterung gemäß Anspruch 1,
dadurch gekennzeichnet,
daß das die Lage des Anschlußkörpers (3) in der Aufnahmevorrichtung (4) bestimmende Lager gebildet wird durch drei Paare Zylinderkörper an entweder der Aufnahmevorrichtung (4) oder dem Anschlußkörper (3), die jeweils mit einer von drei Kugelkalotten am anderen Teil korrespondieren.

18. Halterung gemäß Anspruch 1,
dadurch gekennzeichnet,
daß das die Lage des Anschlußkörpers (3) in der Aufnahmevorrichtung (4) bestimmende Lager gebildet wird durch drei Kugelpaare (6) an entweder der Aufnahmevorrichtung (4) oder dem Anschlußkörper (3), die jeweils mit einem von drei Zylinderkörpern (5) am anderen Teil korrespondieren.

19. Halterung gemäß Anspruch 1,
dadurch gekennzeichnet,
daß die Winkellage des Anschlußkörpers (3) und damit des Tasters (2) oder der Taststiftkombination in der Aufnahmevorrichtung (4) durch einen Stift (7) an der Aufnahmevorrichtung (4) festgelegt ist, der mit einer Ausnehmung (8) am Anschlußkörper (3) korrespondiert.

20. Halterung gemäß Anspruch 1,
dadurch gekennzeichnet,
daß die Winkellage des Anschlußkörpers (3) und damit des Tasters (2) oder der Taststiftkombination in der Aufnahmevorrichtung (4) durch einen Stift am Anschlußkörper festgelegt ist, der mit einer Ausnehmung an der Aufnahmevorrichtung korrespondiert.

## Claims

1. Holding device for the exchangeable fastening of a sensing pin or a sensing pin combination to the sensing head (1) of a co-ordinate measuring machine, the holding device having a receiving device (4) for fastening on the sensing head (1), on which receiving device is a bearing (5) that clearly determines the position of a connection member (3), forming part of the holding device, of the sensing pin (2) or the sensing pin combination when a clamping device (10), arranged in the receiving device (4), of the holding device pulls the connection member (3) into the bearing (5),
characterised in that
the clamping device (10) is formed by a resilient suction cap (11) to which a partial vacuum can be applied and which is arranged between the receiving device (4) and the connection member (3).

2. Holding device according to claim 1,
characterised in that
the clamping device (10) to which a partial vacuum can be applied can be evacuated through a bore (13) which ends in the volume bounded by the suction cap (11), especially a central bore of the receiving device (4).

3. Holding device according to claim 1,
characterised in that
the connection member (3) has a smooth face (12) that corresponds to the suction cap (11) located on the receiving device (4).

4. Holding device according to claim 1,
characterised in that
the receiving device (4) has a smooth face (12) that corresponds to the suction cap (11) located on the connection member (3).

5. Holding device according to claim 1,
characterised in that
there are arranged between the receiving device (4) and the connection member (3) additional automatically operating adhering elements (15) that are fastened to the receiving device (4) and/or to the connection member (3).

6. Holding device according to claim 5,
characterised in that
the adhering elements are formed by at least one permanent magnet (15).

7. Holding device according to claim 5,
characterised in that
the adhering elements are small suction caps.

8. Holding device according to claim 5,
characterised in that
the adhering elements are connections of the random small multiple hooks-and-loops type.

9. Holding device according to claim 5,
characterised in that
the adhering elements are mechanical locking elements.

10. Holding device according to claim 5,
characterised in that
the adhering elements (15) are arranged inside the volume to which a partial vacuum is applied.

11. Holding device according to claim 5,
characterised in that
the adhering elements are arranged outside the volume to which a partial vacuum is applied.

12. Holding device according to claim 5,
characterised in that
the adhering elements are connected to the receiving device (4) or the connection member (3) by way of a resilient intermediate member.

13. Holding device according to claim 5,
characterised in that
the adhering elements (15) connected to the receiving device (4) or the connection member (3) act on a resilient intermediate member (16) connected to the respective opposite component.

14. Holding device according to claim 13,
characterised in that
the intermediate member is an annular diaphragm spring (16) that is arched forwardly onto the adhering element (15).

15. Holding device according to claim 1,
characterised in that
the connection member (3) is made of light metal.

16. Holding device according to claim 1,
characterised in that
the connection member (3) is made of plastics.

17. Holding device according to claim 1,
characterised in that
the bearing determining the position of the connection member (3) in the receiving device (4) is formed by three pairs of cylindrical bodies on either the receiving device (4) or the connection member (3), each of which pairs corresponds to one or three universal ball joints on the other component.

18. Holding device according to claim 1,
characterised in that
the bearing determining the position of the connection member (3) in the receiving device (4) is formed by three pairs of balls (6) on either the receiving device (4) or the connection member (3), each of which pairs corresponds to one of three cylindrical bodies (5) on the other component.

19. Holding device according to claim 1,
characterised in that
the angular position of the connection member (3) and accordingly of the sensor (2) or of the sensing pin combination in the receiving device (4) is determined by a pin (7) on the receiving device (4), which pin corresponds to a recess (8) on the connection member (3).

20. Holding device according to claim 1,
characterised in that
the angular position of the connection member (3) and accordingly of the sensor (2) or of the sensing pin combination in the receiving device (4) is determined by a pin on the connection member, which pin corresponds to a recess on the receiving device.

## Revendications

1. Support pour la fixation interchangeable d'un palpeur ou d'une combinaison de palpeurs sur la tête de palpage (1) d'un appareil de mesure de coordonnées, le support possédant un dispositif de logement (4) utilisé pour la fixation sur la tête de palpage (1) et dans lequel est disposé un palier (5), qui détermine de façon nette la position d'un corps de raccordement (3), qui fait partie du support, du palpeur (2) ou de la combinaison de palpéurs, lorsqu'un dispositif de serrage (10), disposé dans le dispositif de logement (4), du support attire le corps de raccordement (3) dans le palier (5), caractérisé en ce que le dispositif de serrage (10) est formé par une ventouse élastique (11), à laquelle peut être appliquée une dépréssion et qui est située entre le dispositif de logement (4) et le corps de raccordement (3).

2. Support selon la revendication 1, caractérisé en ce qu'on peut établir un vide dans le dispositif de serrage (10), auquel une dépression peut être appliquée, au moyen d'un perçage (13) qui se termine dans le volume délimité par la ventouse (11), notamment un perçage central du dispositif de logement (4).

3. Support selon la revendication 1, caractérisé en ce que le corps de raccordement (3) possède une surface lisse (12), qui correspond à la ventouse (11) située sur le dispositif de logement (4).

4. Support selon la revendication 1, caractérisé en ce que le dispositif de logement (4) possède une surface lisse (12), qui correspond à la ventouse (11) située sur le corps de raccordement (3).

5. Support selon la revendication 1, caractérisé en ce qu'entre le dispositif de logement (4) et le corps de raccordement (3) sont disposés des éléments supplémentaires d'adhérence (15) qui agissent de façon automatique et sont fixés au dispositif de logement (4) et/ou au corps de raccordement (3).

6. Support selon la revendication 5, caractérisé en ce que les éléments d'adhérence sont formés par au moins un aimant permanent (15).

7. Support selon la revendication 5, caractérisé en ce que les éléments d'adhérence sont de petites ventouses.

8. Support selon la revendication 5, caractérisé en ce que les éléments d'adhérence sont des liaisons à crampons.

9. Support selon la revendication 5, caractérisé en ce que les éléments d'adhérence sont des éléments d'encliquetage mécaniques.

10. Support selon la revendication 5, caractérisé en ce que les éléments d'adhérence (15) sont disposés à l'intérieur du volume chargé par une dépression.

11. Support selon la revendication 5, caractérisé en ce que les éléments d'adhérence sont disposés à l'extérieur du volume chargé par une dépression.

12. Support selon la revendication 5, caractérisé en ce que les éléments d'adhérence sont reliés au dispositif de logement (4) ou au corps de raccordement (3), au moyen d'un élément intermédiaire élastique à la manière d'un ressort.

13. Support selon la revendication 5, caractérisé en ce que les éléments d'adhérence (15), qui sont reliés au dispositif de logement (4) ou au corps de raccordement (3), agissent sur un élément intermédiaire (16) élastique à la manière d'un ressort, qui est relié à la partie respectivement opposée.

14. Support selon la revendication 13, caractérisé en ce que l'élément intermédiaire est un ressort en forme de membrane annulaire (16), qui est précintré sur l'élément d'adhérence (15).

15. Support selon la revendication 1, caractérisé en ce que le corps de raccordement (3) est réalisé en un métal léger.

16. Support selon la revendication 1, caractérisé en ce que le corps de raccordement (3) est réalisé en matière plastique.

17. Support selon la revendication 1, caractérisé en ce que le palier, qui détermine la position du corps de raccordement (3) dans le dispositif de logement (4), est formé par trois couples de corps cylindriques installés sur le dispositif de logement (4) ou sur le corps de raccordement (3) et qui correspondent respectivement à l'une de trois calottes sphériques présentes sur l'autre partie.

18. Support selon la revendication 1, caractérisé en ce que le palier, qui détermine la position du corps de raccordement (3) dans le dispositif de logement (4) est formé par trois couples de billes (6) situées sur le dispositif de logement (4) ou sur le corps de raccordement (3) et qui correspondent respectivement à l'un de trois corps cylindriques (5) sur l'autre partie.

19. Support selon la revendication 1, caractérisé en ce que la position angulaire du corps de raccordement (3) et par conséquent du palpeur (2) ou de la combinaison de palpeurs dans le dispositif de logement (4) est fixée par une tige (7) située sur le dispositif de logement (4) et qui correspond à un évidement (8) ménagé dans le corps de raccordement (3).

20. Support selon la revendication 1, caractérisé en ce que la position angulaire du corps de raccordement (3) et par conséquent du palpeur (2) ou de la combinaison de palpeurs dans le dispositif de logement (4) est fixée par une tige située sur le corps de raccordement et qui correspond à un évidement ménagé dans le dispositif de logement.
